# EUROPEAN PATENT APPLICATION

(11) **EP 1 260 732 A2**
(43) Date of publication of application: **27.11.2002**
(21) Application number: 02380053.5
(22) Date of filing: 06.03.2002
(51) Int. Cl.: F16H 1/00

(54) **Double-drive speed reducing device**

(30) Priority: 14.05.2001 ES 200101266 U
(71) Applicant: Rodriguez Martinez, S.C., 03440 Ibi, Alicante (ES)
(72) Inventor: Rodriguez Ferre, José Manuel, 03440 Ibi (Alicante) (ES)
(74) Representative: Canadell-Isern, Roberto

(57) **Abstract**

Double-drive speed reducing device applicable to the revolving operation of an axle at low speed, that includes two electric motors (1,2) mounted side-by-side and with their axles parallel, bearing pinions (3.4) simultaneously geared to an intermediate cogged wheel (5) the hub of which includes a pinion (6), in turn geared to the periphery of a larger cogged wheel (7), forming the outlet axle. The set is enclosed in a box-shell formed by two semi-boxes (11,12) with a flat shape, except the bodies of the electric motors (Fig. 1).

## Description

### SCOPE

This invention refers to a double-drive speed reducing device.

The scope of application of the device in question will be revolving operation of machine, toy and similar parts.

### BRIEF DESCRIPTION OF THE INVENTION

A basic characteristic of the device purpose of this invention is the possibility of obtaining appreciable power in the outlet axle at reduced speed, that is, a sufficient motor couple to operate the machine or toy organs of certain important, using two electric motors with relatively moderate power and simple structure. This avoids the use of one motor only with greater power, which would logically require a complex structure and possibly a higher consumption of electric energy.

Another characteristic of the new device is the possibility of obtaining a revolving movement of a machine organ or toy mechanism that must turn at a low or very low speed, thus achieving with the new design an important reduction between the number of revolutions of the propulsion motors used and the usable outlet axle.

To facilitate understanding of this description attached are some drawings in which a performance case of a double-drive speed reducing device is represented for illustrative and not limiting purposes, according to the principles of the claims.

### BRIEF DESCRIPTION OF THE DRAWINGS

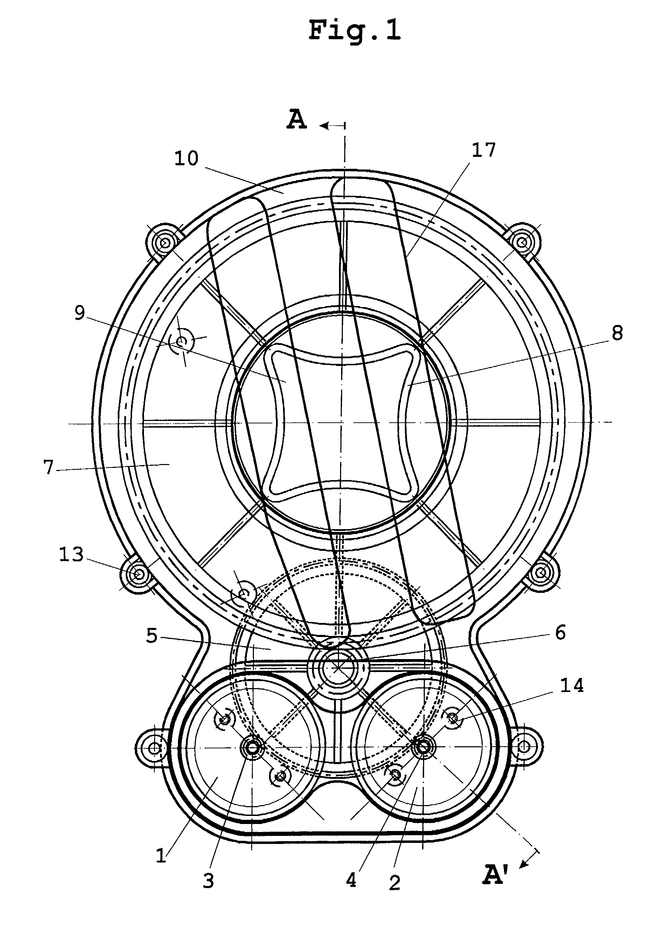

Figure 1 is a view of the new speed reducer in the direction of the axle of the propulsion motors and the outlet axle.

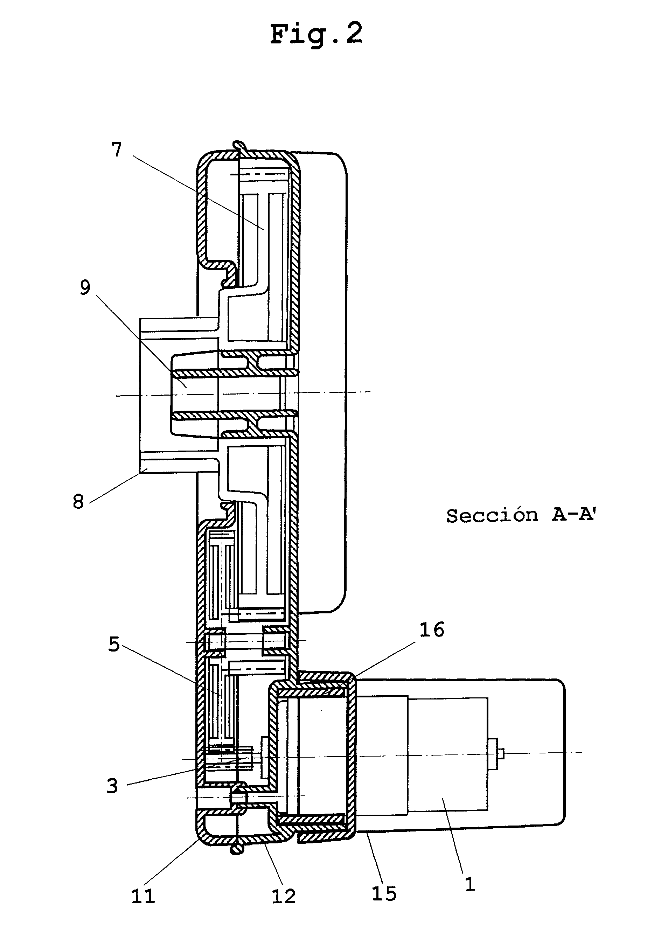

Figure 2 is a meridian section of the new device through a plane indicated as A-A' in figure 1.

### DETAILED DESCRIPTION OF THE INVENTION

The components with numbers in the drawings correspond to the parts indicated below.

The new device is composed of two electric motors, 1 and 2, for example of the direct current type supplied at low voltage, such as 12 volts, coupled in shunt to a common supply source and mounted adjacent and with its axles in parallel, provided with two pinions 3 and 4.

These pinions are geared to a cogged wheel 5 the hub of which bears the pinion 6 and this successively attacks the bigger cogged wheel 7, which revolves a low speed due to the double reduction carried out.

The hub of the wheel 7 defines a component coupled to the organ to be driven, for example, a head 8 in the shape of a box and squared section with concave sides and, on the inside, a star-shaped cylindrical wheel 9. These two coupling components can obviously widely vary with respect to the characteristics of the organs to be operated by the device.

The set is housed in a box-shell 10 with flat shape, defined by two semi-boxes 11 and 12 coupled by means of screws 13 on various points of their periphery.

The electric motors 1 and 2 are attached to one of the semi-boxes 11 by means of screws 14 on their bases and are secured by means of two cylindrical projections 15, provided with interior nerves 16 at equal distance.

The stiffness of the box-shell is increased by reinforcements made of, for example, nerves or projections 17 in one of the semi-boxes, such as 12.

The cogged wheels and the box-shell will be advantageously made of a high resistant plastic material.

## Claims

1. Double-drive reducing device intended for revolving operation of an axle at low speed, **characterized by** the fact that it includes two electric motors (1,2) mounted side-by-side, bearing pinions (3,4) simultaneously geared to an intermediate cogged wheel (5) the hub of which includes a pinion (6), in turn geared to the periphery of a larger cogged wheel (7) forming the outlet axle. The set is enclosed in a box-shell formed by two semi-boxes (11,12) with a flat shape, except the bodies of the electric motors.
